# EUROPEAN PATENT SPECIFICATION

(11) **EP 2 544 987 B1**
(45) Date of publication and mention of the grant of the patent: **22.02.2017**
(21) Application number: 11753673.0
(22) Date of filing: 03.03.2011
(51) Int. Cl.: B67D 9/00, B63B 25/08, B63B 25/24, B67D 7/04

(54) **A SYSTEM FOR REDUCTION OF EMISSIONS FROM VOLATILE LIQUID CARGO**
SYSTEM ZUR REDUZIERUNG VON EMISSIONEN AUS EINER FLÜCHTIGEN FLÜSSIGLADUNG
SYSTÈME DE RÉDUCTION DES ÉMISSIONS PROVENANT D'UNE CARGAISON LIQUIDE VOLATILE

(30) Priority: 08.03.2010 NO 20100326
(43) Date of publication of application: 16.01.2013
(73) Proprietor: Wärtsilä Oil & Gas Systems AS, 1371 Asker (NO)
(72) Inventor: BRØDRESKIFT, Knut, N-3408 Tranby (NO)
(74) Representative: Schmidt, Claus Christian
(86) International application number: PCT/NO2011/000072
(87) International publication number: WO 2011/112095

(56) References cited:
- WO-A1-97/14646
- WO-A1-03/048028
- US-A- 1 824 538
- US-A- 4 233 922
- US-A1- 2005 039 800
- US-B2- 7 228 871

## Description

### BACKGROUND

The invention relates to a system for reduction of emissions from volatile liquid cargo when loading cargo tanks, for instance, and in particular to avoid a conventional venting of hydrocarbon gas released both in the pipe work and cargo tanks into the atmosphere causing environmental problems and economical loss. Thus, some typical applications are for crude oil tankers, floating storage units, and landbased vented tanks in which a supply pipe work directs such volatile liquid cargo into the cargo tanks from top.

Vapours are initially released within the pipe work when pipe segments are routed at high altitude levels towards the cargo tank receiving cargo. As the vessels sometimes are outfitted with loading arms, or pipes segments are routed over the bow, it is often more than 35 m from the highest point of the pipe work down to the tank level. Provided free flow towards the cargo tanks, the result is obviously the occurrence of a pressure drop. Thereby, it is created a vacuum below the true vapour pressure (bubble point) of the cargo and light fractions of gas are flashing off. Such gas fractions are brought
with the liquid cargo towards the cargo tanks and may to some extent be reabsorbed when exposed to higher pressure on their way to the tank. However, some gas escape and
are released in the cargo tanks. The gas emissions have to be handled as the tanks get filled, e.g. vented to the atmosphere.

There exist systems that are constructed to reduce the release of gas during loading of volatile liquid cargo. One solution is presented by US-B₂ 7,597,115 involving the use of a vertically oriented drop pipe or vessel within the cargo tank having big diameter which is complicated and costly to install, and there are no means to assure the conditions within the pipe work upstream the drop pipe or vessel.

Thus, it is a need of solutions eliminating such disadvantages and providing for improved performance.

### SUMMARY OF THE INVENTION

This need is complied with by means of a system for reduction of emissions from volatile liquid cargo according to appended claim 1.

The flow restricting device can preferentially be in the form of a throttle valve controlling upstream conditions within the upper pipe segment.

To actively control pressure within the drop pipe, the top section is communicating with a gas compression unit. When needed to maintain pressure above the cargo bubble point pressure, the gas compression unit can supply compressed inert gas taken from an upper portion of the cargo tank into the top section and pressure equalization pipe.

Further, when needed to control pressure additionally, the gas compression unit is supplying compressed gas sucked from the top section into liquid cargo within the cargo tank or used as fuel for a thermal combustion unit. In such instances, the compressed gas can be supplied into the cargo tank via an absorber being situated at the bottom of tank, submerge in liquid cargo.

The free flow dampening device is preferentially in the form of a continuous or segmented helical flow surface, while a flow stabilizer is provided at the outlet of the drop pipe.

Thereby, it is provided a system mainly eliminating the release of volatile hydrocarbons within the supply pipe work for to cargo tanks. The system is also able to stabilize the cargo before it enters the tanks so as to minimise further emissions inside the cargo tanks. Existing load supply pipe elements towards the tanks can be used as part of the invention.

When cargo enters the area on top of the cargo tanks, there is often present a high point somewhere along the upper pipe segment. Such a high point is causing -especially in the beginning of loading- static pressure differences between the cargo tank and high point in the pipe work and the occurrence of flashing. To avoid this situation, a specially developed throttle valve is mounted before the pipe work drops vertically into the cargo tank. The valve maintains a positive pressure upstream and prevents release of gas in the pipe work at the high points. The valve is specially designed to perform a throttling by reducing the pressure gradually without flashing.

Further, the drop pipe is outfitted with a free flow restrictor and pressure equalization pipe. By damping the speed of flow downwards, generation of vacuum and release of gas is avoided. The perforated pipe centred in the drop pipe equalizes the pressure so as to prevent that a local vacuum is generated.

The gas pressure in the top section of the drop pipe is actively used in controlling emissions as an increase of pressure reduces or eliminates flashing, whereas a reduction of pressure increases flashing so as to stabilize the cargo. Pressure control is affected using the gas compression unit (GCU). The GCU feeds the gas to an absorber in the cargo tanks or to a gas consumer such as a thermal combustion machine for use as pure fuel. If pressure need to be increased, the GCU suck gas from cargo tanks and supply gas to the top of the drop pipe so as to build up pressure. The cargo is further fed by gravity but restricted in acceleration and fed smoothly into the cargo tanks, with no further release of cargo vapours.

### DETAILED DISCUSSION OF THE INVENTION

The present invention is now to be discussed in more detail with reference to the accompanying drawing, in which:
Fig. 1 is a schematical view of the present system; and
Fig. 2 is schematical views of a throttle valve for use in the present system represented in cross-section and side elevation, respectively.

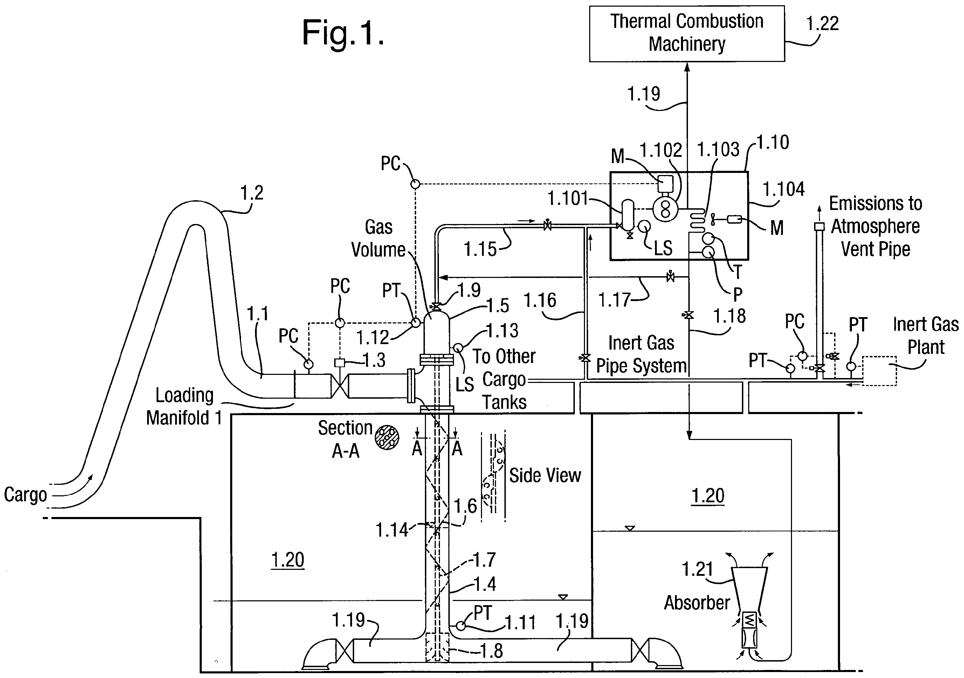

As shown in Fig. 1, the loading pipe work includes an upper pipe segment 1.1. A high point 1.2 on the loading pipe work can be formed by special loading arms or from pipes routed over a bow or stem of the vessel. A throttle valve 1.3 is mounted in the upper pipe segment on top of a cargo tank 1.20 before a drop pipe 1.4 enters the cargo area 1.20. The cargo area can advantageously be subdivided in at least two separate volumes.

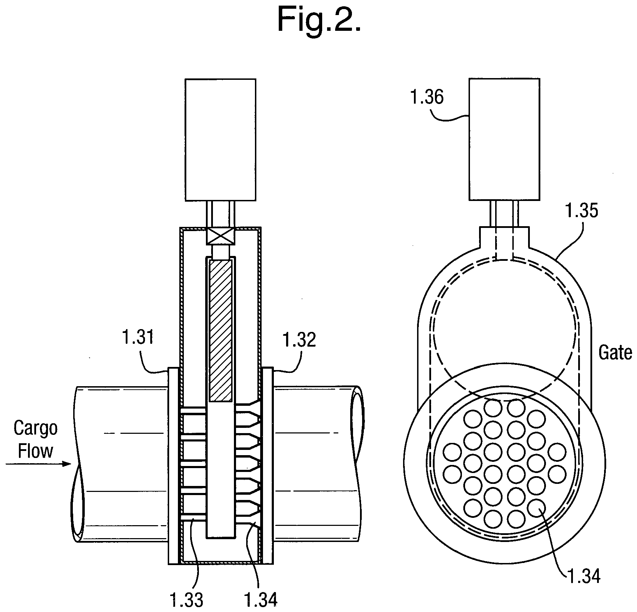

The throttle valve1.3 is designed to give a gradual pressure drop in order to avoid local flashing through the valve. The throttle valve controls the upstream conditions to assure positive pressure at the high point 1.2. As illustrated in Fig. 2, the throttle valve is preferentially in the form of a two-stage valve outfitted with two walls 1.31, 1.32 of a certain thickness perforated with a number of nozzles having orifices 1.33, 1.34. Due to their length, the nozzles have a defined and gradual pressure loss caused by friction in the orifices. The orifices are working in parallel. The numbers opened by a gate 1.35 defines the capacity. The gate is operated using a linear actuator 1.36. This gives an overall linear flow rate as a function of the gate position minimizing a local pressure drop compared with a single throttling point across a short distance. The result is local high liquid speed and consequently low static pressure.

After the throttle valve, the cargo enters a lower pipe segment in the form of a mainly vertical drop pipe 1.4. feeding cargo into the cargo tank via distribution pipes 1.19. Due to the height difference from entrance to outlet, and cargo tank valves normally being open, gravity forces accelerate the cargo resulting in a low pressure and occurrence of flashing. To avoid such flashing, the drop pipe is provided with a top section 1.5 for gas collection as well as pressure monitoring and control. A free flow dampening device 1.6 ensures a smooth flow downwards in the drop pipe towards a liquid surface 1.4 with a gas atmosphere on top. The free flow dampening device is preferentially in the form of a continuous or segmented helical flow surface. The drop pipe functions as a big separator. The gas atmosphere in the top is to be pressure controlled, based on two criteria:
- elimination of flashing by keeping the pressure well above cargo bubble point pressure which is accomplished by using a gas compression unit 1.10 to feed gas into the top of the drop pipe and to suck inert gas from the cargo tank.
- stabilizing the volatile liquid cargo, e.g. crude, by reducing the pressure to or below volatile liquid cargo bubble point.

Thus, by sucking gas from the drop pipe 1.4 and top section 1.5 with the GCU 1.10, a controlled flashing is achieved, The gas is then returned to cargo tank via pipe 1.18 and the absorber 1.21 situated below liquid level, or used as fuel, e.g. pure hydrocarbon gas at 2-3 bar, to a thermal combustion unit 1.22, typically a boiler or a gas engine, via a pipe 1.19.

The GCU 1.10 can be constructed in any appropriate manner, and is here presented in an embodiment including a knock out drum 1.101, a compressor 1.102 of positive displacement type, and a cooler 1.103 provided with an air fan 1.104, or alternatively water cooled. The emitted vapour is fed into the GCU via a pipe 1.15. When needed inert gas from the cargo tank is fed into the GCU via a pipe 1.16 and resulting compressed inert gas is supplied into the top section via a pipe 1.17. The knock out drum 1.101 functions like a separator removing possible drops and particles from the emitted vapour as to facilitate further processing.

The absorber 1.21 is favourably of the type presented by NO 20093784 having a lower ejector, an intermediate mixer, and an upper distributor. The vapour may be fed from below or sideways inclined through the ejector and up into the mixer and distributor. As liquid cargo is flowing into the absorber propelled by the absorber itself, the vertical design especially of mixer and distributor and position is important. Further, the ejector is formed with a throttle and diffuser section having a narrowed cross-section, and a vapour inlet surrounded by a liquid inlet. In any appropriate manner the mixer is adapted to mechanically mix the vapour and liquid cargo flowing from the ejector. The distributor is formed with a number of cones arranged to surround one another and orientated in a direction outwardly inclined to the longitudinal of the absorber. The main purpose of the distributor is to expose the surface of crude against any remaining vapours to get a final absorption of vapours. Moreover, the cross-section between adjacent cones is optimized to facilitate optimal flow rate at exit in the upstream direction. The distributor has a cargo inlet arranged at the transition from the mixer. To prevent escape of any vapour from the absorber, the cones are formed with protrusion mixing the flow of liquid cargo and remaining vapour for a final absorption. The protrusions are spaced in mutual distance from one another on the respective side of each cone, and are preferentially extending peripheral around the cone surfaces.

Further, the drop pipe 1.4 has a pressure equalization pipe 1.7 in the centre. The pressure equalization pipe is perforated and open to the upper area of the drop pipe 1.4 so as to ensure pressure equalization therein, without danger for flashing. At the bottom of the drop pipe has an appropriate flow stabilizer 1.8 so as to assure smooth flow entrance into the distribution pipe segments 1.19 towards the cargo tank volumes 1.20.

To control the situation in the drop pipe, the level is monitored with pressure transmitters 1.11, 1.12 at low and high levels, respectively. In addition a level switch 1.13 is mounted at the top to safeguard that liquid is not sucked out of the pipe if the gas compression unit is in operation.

Control of the pressure in the upper part of the cargo drop pipe is accomplished with the GCU 1.10 supplying gas from the cargo tanks and, thus, maintaining sufficient pressure in the upper portion of the drop pipe 1.4 to eliminate flashing, or if for some reason the pressure is increased above preset levels gas is extracted and returned to cargo via the absorber 1.21. Cargo can be stabilized in the drop pipe before entering the cargo tank. Such stabilization can be achieved by adjusting gas pressure in the drop pipe in a manner providing for controlled flashing by means of GCU sucking and returning gas from and back to the cargo tank via the absorber or gas is supplied as fuel to a thermal engine, 1.22.

Although only one cargo tank and drop pipe are represented in the drawings, it is understood that any combinations of such cargo tanks and drop pipes are possible, ranging from one drop pipe for all tanks to one drop pipe for each tank.

## Claims

1. A system for reduction of emissions from volatile liquid cargo within a pipe work supplying cargo into a cargo tank (1.20), the pipe work including an upper pipe segment (1.1) and a lower pipe segment in the form of a mainly vertical drop pipe (1.4) adapted for terminating near the bottom of the cargo tank (1.20), and having means adapted for controlling the pressure within the pipe work during loading, **characterized in that** a flow restricting device is installed in the upper pipe segment (1.1) in front of the drop pipe (1.4) so as to assure positive pressure throughout the upper pipe segment, and that the drop pipe (1.4) is provided with a perforated pressure equalization pipe (1.7) and a free flow dampening device (1.6) surrounding said pressure equalization pipe, the upper portion of the drop pipe above the upper pipe segment (1.1) is provided with a top section (1.5) so as to form a gas collecting as well as pressure monitoring and controlling volume communicating with the pressure equalization pipe.

2. A system according to claim 1, **characterized in that** the flow restricting device is in the form of a throttle valve (1.3) adapted for controlling upstream conditions within the upper pipe segment (1.1).

3. A system according to claim 1 or 2, **characterized in that** it comprises a gas compression unit (1.10) and **in that** the top section (1.5) is adapted for communicating with said gas compression unit (1.10).

4. A system according to claim 3, **characterized in that** when needed the gas compression unit (1.10) is supplying compressed inert gas taken from an upper portion of the cargo tank into the top section (1.5) and pressure equalization pipe (1.7) so as to maintain pressure above the cargo bubble point pressure.

5. A system according to claim 4, **characterized in that** it comprises a pipe (1.16) from the cargo tank (1.20) to the gas compression unit (1.10) and a pipe (1.17) from the gas compression unit to the top section (1.5) and pressure equalization pipe (1.7) for taking inert gas from the cargo tank via said pipe (1.16) and for supplying compressed inert gas from the gas compression unit (1.10) into the top section (1.5) and pressure equalization pipe (1.7) via said pipe (1.17).

6. A system according to claim 3, **characterized in that** the gas compression unit (1.10) is adapted for, when needed, supplying compressed gas sucked from the top section (1.5) into said liquid cargo within the cargo tank (1.20) or the system is adapted for using said compressed gas as fuel for a thermal combustion unit (1.22).

7. A system according to claim 6, **characterized in that** the gas compression unit (1.10) is connected to the cargo tank via a pipe (1.18) for supply of compressed gas into the cargo tank via said pipe (1.18) provided with an absorber (1.21), the absorber being situated at the bottom of the tank, submerged in liquid cargo.

8. A system according to any of the preceding claims, **characterized in that** the free flow dampening device is in the form of a continuous or segmented helical flow surface (1.6).

9. A system according to claim 6, **characterized in that** a flow stabilizer (1.8) is provided at the outlet of the drop pipe (1.4).

10. A system according to any of the preceding claims, **characterized in that** the drop pipe (1.4) has two pressure transmitters (1.11, 1.12), one at low level and one at high level, respectively, for monitoring the cargo level in said drop pipe.

## Patentansprüche

1. System zur Reduzierung von Emissionen aus einer flüchtigen Flüssigladung innerhalb einer Rohrleitung, die eine Ladung in einen Ladetank (1.20) liefert, wobei die Rohrleitung ein oberes Rohrsegment (1.1) und ein unteres Rohrsegment in Form eines hauptsächlich vertikalen Fallrohrs (1.4) aufweist, welches dazu ausgebildet ist, in der Nähe des Bodens des Ladetanks (1.20) zu enden, und Mittel aufweist, die zur Steuerung des Drucks in der Rohrleitung während des Ladens ausgebildet ist, **dadurch gekennzeichnet, dass** ein Durchflussregler in dem oberen Rohrsegment (1.1) vor dem Fallrohr (1.4) installiert ist, um einen positiven Druck über das gesamte obere Rohrsegment zu gewährleisten, und dass das Fallrohr (1.4) mit einer perforierten Druckausgleichleitung (1.7) und einer die Druckausgleichleitung umgebenden Dämpfungsvorrichtung des Freiflusses (1.6) versehen ist, wobei der obere Teil des Fallrohrs über dem oberen Rohrsegment (1.1) mit einem oberen Abschnitt (1.5) versehen ist, um eine Gasaufsammlung sowie ein Drucküberwachungs- und Drucksteuerungsvolumen zu bilden, welches in einer Kommunikationsverbindung mit der Druckausgleichleitung steht.

2. System nach Anspruch 1, **dadurch gekennzeichnet, dass** der Durchflussregler in Form eines Drosselventils (1.3) ist, welches für die Steuerung von Anströmbedingungen innerhalb des oberen Rohrsegments (1.1) ausgebildet ist.

3. System nach Anspruch 1 oder 2, **dadurch gekennzeichnet, dass** es eine Gaskompressionseinheit (1.10) aufweist, und dass der obere Abschnitt (1.5) für die Kommunikation mit der Gaskompressionseinheit (1.10) ausgebildet ist.

4. System nach Anspruch 3, **dadurch gekennzeichnet, dass** bei Bedarf die Gaskompressionseinheit (1.10) komprimiertes Inertgas, das aus einem oberen Abschnitt des Ladetanks genommen ist, in den oberen Abschnitt (1.5) und in die Druckausgleichleitung (1.7) liefert, um den Druck über dem Druck des Blasenpunktes der Ladung aufrechtzuerhalten.

5. System nach Anspruch 4, **dadurch gekennzeichnet, dass** es eine Rohrleitung (1.16) von dem Ladetank (1.20) bis zur Gaskompressionseinheit (1.10) und eine Rohrleitung (1.17) von der Gaskompressionseinheit bis zum oberen Abschnitt (1.5) und der Druckausgleichleitung (1.7) aufweist, um Inertgas von dem Ladetank über die Rohrleitung (1.16) zu nehmen, und um komprimiertes Inertgas von der Gaskompressionseinheit (1.10) in den oberen Abschnitt (1.5) und die Druckausgleichleitung (1.7) über die Rohrleitung (1.17) zu liefern.

6. System nach Anspruch 3, **dadurch gekennzeichnet, dass** die Gaskompressionseinheit (1.10) dazu ausgebildet ist, bei Bedarf komprimiertes Gas, welches von dem oberen Abschnitt (1.5) abgesaugt worden ist, in die Flüssigladung innerhalb des Ladetanks (1.20) zu liefern, oder das System dazu ausgebildet ist, das komprimierte Gas als Brennstoff für eine thermische Verbrennungseinheit (1.22) zu verwenden.

7. System nach Anspruch 6, **dadurch gekennzeichnet, dass** die Gaskompressionseinheit (1.10) über eine Leitung (1.18) mit dem Ladetank verbunden ist, um komprimiertes Gas in den Ladetank über die Rohrleitung (1.18) zu liefern, die mit einem Absorber (1.21) versehen ist, wobei der Absorber am Boden des Tanks, in Flüssigkeit eingetaucht, angeordnet ist.

8. System nach einem der vorgehenden Ansprüche, **dadurch gekennzeichnet, dass** die Freifluss-Dämpfungsvorrichtung in Form einer kontinuierlichen oder segmentierten spiralförmigen Strömungsfläche (1.6) ist.

9. System nach Anspruch 6, **dadurch gekennzeichnet, dass** ein Strömungsstabilisator (1.8) am Auslass des Fallrohrs (1.4) vorgesehen ist.

10. System nach einem der vorgehenden Ansprüche, **dadurch gekennzeichnet, dass** das Fallrohr (1.4) zwei Druckmessumformer (1.11, 1.12) aufweist, einer auf niedrigem Niveau bzw. einer am hohen Niveau, um das Ladeniveau in dem Fallrohr zu überwachen.

## Revendications

1. Système de réduction d'émissions issues d'une cargaison liquide volatile dans une tuyauterie fournissant une cargaison dans une citerne à cargaison (1.20), la tuyauterie comprenant un segment supérieur de tuyau (1.1) et un segment de tuyau inférieur dans la forme d'un tuyau de descente essentiellement vertical (1.4) adapté de manière à se terminer près du fond de la citerne à cargaison (1.20), et ayant des moyens adaptés pour commander la pression dans la tuyauterie au cours du chargement, **caractérisé en ce qu'**un dispositif de restriction de flux est installé dans le segment de tuyau supérieur (1.1) en face du tuyau de descente (1.4) de manière à assurer une pression positive dans l'ensemble du segment de tuyau supérieur, et **en ce que** le tuyau de descente (1.4) est muni d'un tuyau perforé d'égalisation de pression (1.7) et un dispositif d'amortissement d'écoulement libre (1.6) entourant ledit tuyau d'égalisation de pression, la partie supérieure du tuyau de descente au-dessus du segment de tuyau supérieur (1.1) est munie d'une portion supérieure (1.5) de manière à former un collecteur de gaz ainsi qu'un volume de commande et de surveillance de la pression communiquant avec le tuyau d'égalisation de pression.

2. Système selon la revendication 1, **caractérisé en ce que** le dispositif de restriction de flux est dans la forme d'une soupape d'étranglement (1.3) adaptée de manière à commander les conditions en amont dans le segment de tuyau supérieur (1.1).

3. Système selon la revendication 1 ou 2, **caractérisé en ce qu'**il comprend une unité de compression de gaz (1.10), et **en ce que** la partie supérieure (1.5) est adaptée de manière à communiquer avec l'unité de compression de gaz (1.10).

4. Système selon la revendication 3, **caractérisé en ce que**, si nécessaire, l'unité de compression de gaz (1.10) fournit du gaz comprimé inerte pris à partir d'une partie supérieure de la citerne à cargaison dans la portion supérieure (1.5) et le tuyau d'égalisation de pression (1.7) de manière à maintenir une pression supérieure à la pression du point de bulle de la cargaison.

5. Système selon la revendication 4, **caractérisé en ce qu'**il comprend un tuyau (1.16) s'étendant de la citerne à cargaison (1.20) à l'unité de compression de gaz (1.10) et un tuyau (1.17) s'étendant de l'unité de compression à la portion supérieure (1.5) et le tuyau d'égalisation de pression (1.7) pour prendre du gaz inerte à partir de la citerne à cargaison par l'intermédiaire dudit tuyau (1.16) et pour livrer du gaz inerte comprimé à partir de l'unité de compression de gaz (1.10) dans la portion supérieure (1.5) et le tuyau d'égalisation de pression (1.7) par l'intermédiaire dudit tuyau (1.17).

6. Système selon la revendication 3, **caractérisé en ce que** l'unité de compression de gaz (1.10) est adaptée, si nécessaire, de manière à fournir du gaz comprimé aspiré à partir de la portion supérieure (1.5) dans ladite cargaison liquide à l'intérieur de la citerne à cargaison (1.20), ou le système est adapté pour l'usage dudit gaz comprimé en tant que combustible pour une unité de combustion thermique (1.22).

7. Système selon la revendication 6, **caractérisé en ce que** l'unité de compression de gaz (1.10) est reliée à la citerne à cargaison par l'intermédiaire d'un tuyau (1.18) pour fournir du gaz comprimé dans la citerne à cargaison par l'intermédiaire dudit tuyau (1.18) muni d'un absorbeur (1.21), ledit absorbeur étant placé au fond de la citerne, plongé dans une cargaison liquide.

8. Système selon l'une quelconque des revendications précédentes, **caractérisé en ce que** le dispositif d'amortissement d'écoulement libre est dans la forme d'une surface d'écoulement hélicoïdale continue ou segmentée (1.6).

9. Système selon la revendication 6, **caractérisé en ce qu'**un stabilisateur d'écoulement (1.8) est prévu à la sortie du tuyau de chute (1.4).

10. Système selon l'une quelconque des revendications précédentes, **caractérisé en ce que** le tuyau de descente (1.4) présente deux capteurs de pression (1.11, 1.12), l'un situé au niveau bas et l'un situé au niveau haut, respectivement, pour surveiller le niveau de cargaison dans ledit tuyau de descente.
